(19) Europäisches Patentamt
European Patent Office
Office européen des brevets

(11) **EP 1 078 889 B1**

(12) **EUROPÄISCHE PATENTSCHRIFT**

(45) Veröffentlichungstag und Bekanntmachung des Hinweises auf die Patenterteilung:
**19.12.2018 Patentblatt 2018/51**

(51) Int Cl.:
*C03B 5/225* *(2006.01)*   *C03B 5/02* *(2006.01)*
*C03B 5/44* *(2006.01)*   *C03C 1/00* *(2006.01)*

(21) Anmeldenummer: **00117289.9**

(22) Anmeldetag: **17.08.2000**

(54) **Verfahren zur Läuterung von Glasschmelzen**

Process for refining glass melts

Procédé d'affinage de verre en fusion

(84) Benannte Vertragsstaaten:
**AT BE CH CY DE DK ES FI FR GB GR IE IT LI LU MC NL PT SE**

(30) Priorität: **21.08.1999 DE 19939771**

(43) Veröffentlichungstag der Anmeldung:
**28.02.2001 Patentblatt 2001/09**

(73) Patentinhaber: **Schott AG**
**55122 Mainz (DE)**

(72) Erfinder:
• **Römer, Hildegard, Dr.**
**61184 Karben (DE)**
• **Kiefer, Werner, Dr.**
**55126 Mainz (DE)**
• **Köpsel, Detlef, Dr.**
**55126 Mainz (DE)**
• **Nass, Peter, Dr.**
**55120 Mainz (DE)**
• **Rodek, Erich, Dr.**
**55126 Mainz (DE)**
• **Kolberg, Uwe, Dr.**
**55252 Mainz-Kastel (DE)**
• **Pfeiffer, Thomas Dr.**
**55218 Ingelheim (DE)**

(56) Entgegenhaltungen:
EP-A- 0 156 479    WO-A-83/00685
DE-B- 1 596 737    DE-C- 19 603 698
DE-C- 19 616 633    DE-C- 19 617 344
DE-C- 19 739 912    DE-C- 19 747 354
FR-A- 756 495    FR-A- 776 403
FR-A- 2 033 386    GB-A- 0 845 982
SU-A- 0 133 204    US-A- 3 511 629
US-A- 4 110 097    US-A- 5 665 137

• V.V.NEZHENTSEV ET AL.: "Use of induction furnaces with cold crucible for melting hard glasses" GLASS AND CERAMICS, Bd. 43, Nr. 9-10, September 1986 (1986-09) - Oktober 1986 (1986-10), Seiten 391-396, XP002149729 CONSULTANTS BUREAU, NEW YORK, US ISSN: 0361-7610

**Beschreibung**

Die Erfindung betrifft ein Verfahren zur Läuterung von Glasschmelzen, bei dem Läutergas durch Läutermittel in der Glasschmelze erzeugt wird.

Unter Läuterung versteht man in Bezug auf Glasschmelzen die Entfernung von Gasblasen aus der Schmelze. Um höchste Fremdgas- und Blasenfreiheit zu erzielen, bedarf es der gründlichen Durchmischung und Entgasung des geschmolzenen Gemenges.

Das Verhalten von Gasen bzw. von Blasen in einer Glasschmelze sowie deren Entfernung ist beispielsweise in "Glastechnische Fabrikationsfehler", herausgegeben von H. Jebsen-Marwedel und R. Brückner, 3. Auflage, 1980, Springer Verlag, auf den Seiten 195 ff. beschrieben.

Es sind allgemein zwei prinzipielle Läuterverfahren bekannt, die sich im wesentlichen durch die Art und Weise der Läutergaserzeugung unterscheiden.

Bei den physikalischen Läuterverfahren wird beispielsweise die Viskosität der Glasschmelze durch Temperaturerhöhung erniedrigt. Zur Erniedrigung der Viskosität werden daher während der Läuterung höhere Temperaturen der Glasschmelze eingestellt als im Einschmelz- und Abstehbereich. Je höher die Läutertemperatur gewählt werden kann, um so effektiver ist die Blasenentfernung aus der Schmelze. Dabei sollte die Viskosität der Schmelze möglichst unter $10^2$ dPas liegen. Die maximal zulässige Läutertemperatur wird aber durch die Temperaturbeständigkeit des Wandmaterials des jeweils verwendeten Einschmelzaggregats begrenzt, und liegt bei Verwendung von Pt-Legierungen bei maximal 1600 °C und bei Feuerfeststeinen bei maximal 1650 °C bis 1700 °C.

Weitere physikalische Läuterverfahren zeichnen sich dadurch aus, daß die Glasschmelze in ihren Strömungen beeinflußt wird, daß mechanische Bewegungen der Schmelze durch Bülwern oder Gaseinblasen verursacht werden, daß durch Einwirkungen von Schall oder Ultraschall die Schmelze mechanisch erschüttert wird oder eine Blasenentfernung mittels Zentrifugieren erfolgt. Des weiteren findet die Anwendung von Vakuum (Vakuumläutern) oder Druck (Hochdruckläutern) Verwendung oder durch Aufrauhung der Oberfläche wird eine verstärkte Blasenkeimbildung initiiert.

Am häufigsten werden chemische Läuterverfahren angewendet. Ihr Prinzip besteht darin, daß der Schmelze Verbindungen zugesetzt werden, die sich zersetzen und Gase abspalten, oder Verbindungen, die bei höheren Temperaturen flüchtig sind, oder Verbindungen, die in einer Gleichgewichtsreaktion bei höheren Temperaturen Gase abgeben.

Zur ersten Gruppe der Verbindungen gehört beispielsweise Natriumsulfat, das zur Läuterung von Kalk-Natron-Gläsern eingesetzt wird. Die Abgabe von $SO_2$ und $O_2$ erfolgt dabei in einem Temperaturbereich von 1300 °C bis 1450 °C mit einem Maximum bei 1380 °C. Dieser Temperaturbereich entspricht in etwa dem Läuterbereich solcher Gläser.

Zu Verbindungen, die bei hohen Läutertemperaturen aufgrund ihres Dampfdruckes flüchtig sind und dadurch wirken, sind Halogenide zu zählen. So werden beispielsweise eine Reihe von Borosilicatgläsern mit NaCl geläutert.

Die letzte Gruppe von Stoffen schließlich umfaßt die sog. Redox-Läutermittel wie beispielsweise Arsenoxid und Antimonoxid. Dabei werden als Redox-Läutermittel polyvalente Ionen eingesetzt, die in mindestens zwei Oxidationsstufen auftreten können, welche in einem temperaturabhängigen Gleichgewicht untereinander stehen, wobei bei hohen Temperaturen ein Gas, meist Sauerstoff, freigesetzt wird.

Das Redox-Gleichgewicht der in der Schmelze gelösten Substanz läßt sich am Beispiel des Arsenoxids durch die Gleichung (I)

$$As_2O_5 \leftrightarrows As_2O_3 + O_2 \uparrow \qquad \text{(I)}$$

darstellen.

Die Gleichgewichtskonstante K zu (I) kann wie in Gleichung (II) formuliert werden:

$$K(T) = \frac{a_{As_2O_3} \cdot p_{O_2}}{a_{As_2O_5}} \qquad \text{(II)}$$

In dieser Gleichung bedeuten $aAs_2O_3$ und $aAs_2O_5$ die Aktivitäten des Arsentri- bzw. Arsenpentoxids und $Po_2$ die Fugazität des Sauerstoffs. Die Gleichgewichtskonstante K ist stark temperaturabhängig, und über die Temperatur und die Aktivität der oxidischen Arsenverbindungen läßt sich eine definierte Sauerstofffugazität $pO_2$ einstellen.

Bei der chemischen Läuterung kann man im wesentlichen drei Läutereffekte unterscheiden:

1) einen primären Läutereffekt, bei dem in die Blasen , die bei der Zersetzung des Gemenges entstehen, beispielsweise $CO_2$-, $N_2$-, $H_2O$-, $NO$-, $NO_2$-Blasen,die Gase eindiffundieren, die bei Zersetzung der zugegebenen Läutermittel entstehen, z. B. Sauerstoff aus Redox-Läutermitteln;

2) einen sekundären Läutereffekt, bei dem eine Entgasung der Glasschmelze erfolgt, in dem es zur spontanen Bildung von Gasblasen durch die zugegebenen Läutermittel kommt, z. b. $O_2$-Blasen aus Redox-Läutermittel. In diese Läuterblasen könne Fremdgase wie $CO_2$, $H_2O$, $N_2$, NO, $NO_2$ eindiffundieren, selbst wenn ihr Partialdruck unter $10^5$ Pa liegt und

3) einen sog. Resorptionseffekt, bei dem sich nach 1) oder 2) entstandene, bei einer Temperaturerniedrigung noch in der Schmelze befindliche aufgeblähte Blasen von zum Beispiel Sauerstoff auflösen, beispielsweise beim Redox-Gleichgewicht (I) durch Verschiebung des Gleichgewichts auf die Seite des Edukts.

Für hochschmelzende Gläser, die eine Viskosität von < $10^2$ dPas erst oberhalb 1700 °C aufweisen, sind die bekannten Läutermittel, wie $Na_2SO_4$, NaCl, $As_2O_5$ oder $Sb_2O_5$, ineffektiv. Die Freisetzung der Läutergase erfolgt bereits beim Einschmelzen, die Läutergase stehen für den sekundären Läutereffekt nicht mehr zur Verfügung. Es findet nur der primäre Läutereffekt statt. Übliche Redox-Läutermittel wie $As_2O_5$ oder $Sb_2O_5$ zeigen eine effektive Läutersauerstoff-abgabe zwischen 1150 °C und 1500 °C mit einem Maximum bei 1220 °C bis 1250 °C, wobei die jeweilige Sauerstoffabgabe außer von der Läutertemperatur im wesentlichen von der Glaszusammensetzung und von der Läutermittelzusammensetztung (ein oder mehrere Läutermittel) abhängt. Es müssen, besonders für hochschmelzende Gläser, größere Mengen an Läutermittel als eigentlich notwendig eingesetzt werden, um überhaupt einen Läutereffekt zu erzielen. Die hohen Mengen an Läutermittel sind besonders bei Arsen- und Antimonoxid nachteilig, da sie stark toxisch und teuer sind. Zudem kann eine Zugabe von Läutermitteln die Eigenschaften des Glases unvorteilhaft beeinflussen sowie die Herstellungskosten - da es sich um in der Regel teure Verbindungen handelt - erhöhen. Aufgrund der Wechselwirkung mit dem Zinnfloatbad können Arsen- und Antimonoxid beim Floatprozeß nicht eingesetzt werden. Dadurch, daß hochschmelzende Gläser die für die Läuterung vorteilhafte Viskosität von < $10^2$ dPas erst oberhalb konventionell zugänglicher Temperaturen erreichen, gestaltet sich deren Läuterung schwierig bzw. ist eine effektive Läuterung überhaupt nicht möglich.

In einer Reihe von Patenten wird versucht, für hochschmelzende Gläser $SnO_2$ als Läutermittel einzusetzen, dessen Maximum der Läutergasabgabe bei höheren Temperaturen liegt.

So ist beispielsweise aus der DE 196 03 698 C1 die Verwendung von 0,5 bis 2,0 Gew.-% $SnO_2$ als Läutermittel zur Läuterung von alkalifreiem Aluminoborosilicatglas bekannt, wobei die Läuterung der Glasschmelze bei 1600 °C durchgeführt wird.

Die Verwendung von 0,02 bis 1,0 Mol.% $SnO_2$ und von 0,02 bis 0,5 Mol-% $CeO_2$ als Läutermittel zur Läuterung von chemisch vorspannbaren Aluminosilicatgläsern ist aus der DE 196 16 633 C1 bekannt. Die Läuterung wird bei 1580 °C in einem Pt-Tiegel durchgeführt.

Ebenfalls ist aus der DE 196 17 344 C1 die Verwendung von 0,5 bis 2,0 Gew.-% $SnO_2$, bevorzugt zusammen mit Nitraten, als Läutermittel zur Läuterung von alkalifreien Aluminoborosilicatglas bekannt, wobei eine Läutertemperatur von 1620 °C in einem Quarztiegel eingestellt wird.

In der DE 197 39 912 C2 wird die Verwendung von 0,2 bis 1 Gew.-% $SnO_2$ und 0,1 bis 0,5 Gew.-% $CeO_2$ u.a. als Läutermittel genannt, wobei auf die außergewöhnlich gute Läuterwirkung bei einer Kombination beider Läutermittel hingewiesen wird. Das beanspruchte Aluminoborosilicatglas wird bei einer Temperatur von 1620 °C in einem Tiegel aus $SiO_2$-Keramik geläutert.

Das Maximum des Läutergasabgabe von $SnO_2$ liegt im oberen Bereich der konventionell erreichbaren Schmelztemperatur. Daher wird in all diesen Beispielen versucht, durch zumeist hohe Dosierung der Läutermittel eine Läuterung hochschmelzender Gläser zu erreichen, was sich oftmals negativ auf die Produkteigenschaften, wie im Fall von $SnO_2$ auf die Kristallisationsstabilität, oder im Fall von färbenden Oxiden wie $CeO_2$ auf den Farbort des Produkts auswirkt. Bei hochschmelzenden Gläsern liegt die Einschmelztemperatur im maximal zulässigen Temperaturbereich für die Wannen aus keramischen Feuerfest-Material oder Platin.

Für Aluminosilicatgläser und -glaskeramiken wird der für die Läuterung günstige Viskositätsbereich von < $10^2$ dPas erst oberhalb von 1700 °C erreicht, also in einem Temperaturbereich, der mit konventionellen Schmelztechnologien und Läuterverfahren nicht zugänglich ist.

Die Schrift FR 776 403 A beschreibt einen Temperaturbereich zur Läuterung von 1500 - 1600 °C, wobei Chloride als Läutermittel erwähnt werden.

Aus dem Artikel von V.V. Nezhentsev et al. in Glass and Ceramics, New York, 43 (1986), Seiten 392 - 395 geht das Hochtemperaturerhitzen (superheating) von Glasschmelzen zur spontanen Läuterung und Homogenisierung hervor. Die Läuterung beruht auf dem physikalischen Prinzip der Hochtemperaturerhitzung (niedrige Viskosität der Schmelze, leichtere Entgasung). Es werden keine Läutermittel erwähnt.

Die Auslegeschrift DE 1 596 737 beschreibt ein Vakuumschmelzverfahren zur Herstellung von wasserfreien optischen Gläsern. Der Glasschmelze wird Kohlenstoff zugesetzt und die Temperatur auf 1300 °C und dann auf 1650 bis 1750 °C erhöht. Der Kohlenstoff dient besonders zur Entfernung des Wasserdampfs.

Der Erfindung liegt die Aufgabe zugrunde, ein Verfahren zur Läuterung von Glasschmelzen zu finden, bei dem Läutergas durch Läutermittel in der Glasschmelze erzeugt wird, das es gestattet das Läuterpotential bekannter Läutermittel voll auszuschöpfen, das die Anwendung neuer Läutermittel ermöglicht, das die Läuterung hochschmelzender Gläser, insbesondere die Läuterung von Gläsern deren Viskosität von < $10^2$ dPas erst oberhalb 1700 °C erreicht wird, verbessert bzw. ermöglicht, das die Reboilneigung verringert, das auf toxische Läutermittel verzichtet oder deren Anwendung wesentlich reduziert und das eine niedrigere Dosierung der Läutermittel (bei gleichbleibender oder sogar verbesserter Läuterung) ermöglicht. Die Läutergasabgabe durch Läutermittel soll in einem Temperaturbereich erfolgen, in dem die Viskosität der Glasschmelze so niedrig ist, daß ein rascher Aufstieg der Blasen zur Oberfläche der Schmelze möglich ist.

Des weiteren soll das Verfahren eine, im Vergleich zum Stand der Technik, wesentliche Verkürzung der Läuterzeit und/oder wesentlich kleinere Läutervolumen ermöglichen.

Gelöst wird diese Aufgabe durch ein Verfahren zur Läuterung von Glasschmelzen, bei dem Läutergas durch Läutermittel in der Glasschmelze erzeugt wird, wobei der Glasschmelze wenigstens ein Läutermittel zugesetzt wird, dessen Maximum der Läutergasabgabe bei dieser Glasschmelze oberhalb 19.6.2015 1700°C liegt, und wobei die Glasschmelze auf eine Temperatur zwischen 1700 °C und 2800 °C aufgeheizt und geläutert wird.

Vorteilhafte Verfahrensmodifikationen sind Gegenstand der abhängigen Patentansprüche. Die Vorteile des erfindungsgemäßen Läuterverfahrens bestehen im wesentlichen darin, daß im Gegensatz zum Stand der Technik das Läuterpotential bekannter Läutermittel voll ausgeschöpft wird. Unter Verwendung üblicher Mengen an bekannten Läutermitteln wird eine verbesserte und somit effektivere Läuterung erzielt oder aber bei Verwendung von geringeren als den üblichen Mengen an bekannten Läutermitteln wird durch die höhere Läutertemperatur eine genau so gute Läuterung wie bisher erzielt.

Das erfindungsgemäße Verfahren ermöglicht es auch, für hochschmelzende Gläser eine sekundäre Läuterung durchzuführen. Dadurch, daß die Glasschmelze auf eine Temperatur zwischen 1700 °C und 2800 °C aufgeheizt wird und das Maximum der Läutergasabgabe durch die Läutermittel oberhalb 1700 °C erfolgt, werden erstmals in diesem Temperaturbereich spontane Läutergasblasen erzeugt. Der Temperaturbereich der Läutergasblasenbildung liegt über dem Temperaturbereich für das Einschmelzen des Glases. In die Läutergasblasen können die in der Glasschmelze nach dem Einschmelzen Verbliebenen Restgase, wie z. B. $CO_2$, $NO_2$, $SO_2$, $H_2O$, eindiffundieren, auch wenn deren Partialdruck bereits unter $10^5$ Pa liegt. Die Verminderung des Partialdruckes der Restgase führt zu einer deutlichen Reduktion der Reboilgefahr der Glasschmelze. Auf bislang übliche toxische Läutermittel wie $As_2O_5$ und $Sb_2O_5$ kann gänzlich verzichtet bzw. deren Menge deutlich reduziert werden. Generell können die Läutermittel wesentlich geringer dosiert werden und das bei gleichbleibender oder gar verbesserter Läuterung der Glasschmelze. Außerdem wird eine deutliche Reduzierung der Läuterzeit erreicht und das Läutervolumen kann erheblich reduziert werden.

In einer bevorzugten Verfahrensführung wird die Glasschmelze zur Läuterung auf eine Temperatur zwischen 1700 °C und 2400 °C aufgeheizt.

Neben der vorteilhaften chemischen Läuterung spielt die aufgrund der hohen Temperaturen verbesserte physikalische Läuterung eine große Rolle. Bei den hohen Temperaturen sinkt die Viskosität der Schmelze, womit die Blasenaufstiegsgeschwindigkeit wesentlich erhöht wird. So ist die Blasenaufstiegsgeschwindigkeit in einer 2400 °C heißen Glasschmelze etwa 100 mal größer als in einer entsprechenden 1600 °C heißen Schmelze. D. h. bei einer 100 mal höheren Aufstiegsgeschwindigkeit kann die Aufenthaltszeit der Glasschmelze (Läuterzeit) um den Faktor 100 reduziert werden.

Außerdem ist die Diffusion der in der Schmelze gelösten Fremdgase ($CO_2$, $N_2$...) bei hohen Temperaturen höher als bei konventionellen Temperaturen. Damit läuft die Entgasung schneller ab. Die Gase diffundieren schneller in Läuterblasen. Weiterhin treten bei den hohen Temperaturen der Glasschmelze starke Konvektionen auf, die dafür sorgen, daß jedes Volumenelement der Glasschmelze in regelmäßigen Zeitabständen in den oberflächennahen Bereich der Glasschmelze gelangt, wo aufgrund der Auftriebskräfte die Blasen ausgetrieben werden. Die Konvektion bewirkt zudem, daß jedes Volumenelement der Schmelze durch die heißesten Bereiche des Läuteraggregats transportiert wird und damit die Läutermittel ihr volles Potential entfalten können.

Die Überlagerung aller Effekte, chemische Läuterung, Aufblähen der Blasen aufgrund der hohen Temperatur, starke Konvektion und hohe Aufstiegsgeschwindigkeit der Blasen aufgrund der niedrigen Viskosität bewirken eine schnelle und effektive Läuterung der Glasschmelze.

So beträgt beispielsweise die typische Läuterzeit für eine 50 cm tiefe und 1600 °C heiße Glasschmelze in einem 50 l Schmelzaggregat einen Tag, um Blasen mit einem Radius kleiner als 0,3 mm aufgrund des Auftriebs auszuläutern. Bei einer Läutertemperatur von 2400 °C ergibt sich hingegen eine Läuterzeit von 5 Minuten ohne Berücksichtigung der Konvektion und von 2 Minuten unter Berücksichtigung der Konvektion.

Bevorzugt wird dabei die Vikosität der Glasschmelze auf einen Wert kleiner als $10^3$ dPas und besonders bevorzugt auf einen Wert kleiner als $10^2$ dPas eingestellt. Es zeigte sich, daß der leichtere Blasenaufstieg aufgrund der niedrigeren Viskosität zwar wie erwartet einen positiven Einfluß auf die Läuterung hat, dieser Effekt aber nicht ausreicht um auf den Einsatz von Läutermitteln zu verzichten. Für Aluminosilicatgläser und -glaskeramiken wird eine Viskosität kleiner als $10^2$ dPas oberhalb 1650 °C, oftmals oberhalb 1700 °C, erreicht, so daß diese Gläser erstmals einer effektiven, d.h. verbesserten und zeitsparenden Läuterung unterzogen werden können.

Als besonders vorteilhaft hat es sich erwiesen, wenn das Verfahren so geführt wird, daß die Glasschmelze auf die Temperatur eingestellt wird, bei der das Maximum der Läutergasabgabe durch die Läutermittel erfolgt, d.h. das mit einem Mindesteinsatz von Läutermittel ein Maximum an Läutergas erzeugt und abgegeben wird, und somit zur Läuterung der Glasschmelze beiträgt.

Um das erfindungsgemäße Läuterverfahren möglichst vorteilhaft zu führen, ist es zweckmäßig, wenn als Läutermittel Redox-Verbindungen zugegeben werden, insbesondere Redox-Oxide wie $SnO_2$, $CeO_2$, $Fe_2O_3$, $ZnO$, $TiO_2$, $V_2O_5$, $MoO_3$, $WO_3$, $Bi_2O_5$, $PrO_2$, $Sm_2O_3$, $Nb_2O_5$, $Eu_2O_3$, $TbO_2$ und/oder $Yb_2O_3$. Prinzipiell eignen sich alle Redox-Verbindungen deren Maxima der Läutergasabgabe oberhalb 1700 °C liegen.

Interessant für die Redox-Läuterung sind auch einige Seltene-Erden-Oxide, deren Maximum der Läutergasabgabe ebenfalls über 1700°C liegt.

Dabei konnte gezeigt werden, daß bei bekannten Läutermitteln wie $SnO_2$ und $CeO_2$ bei Temperaturen oberhalb von 1600 °C das Maximum der Läutergasabgabe erfolgt, und daß überraschenderweise Redox-Oxide wie $Fe_2O_3$, $ZnO$, $TiO_2$, $V_2O_5$, $MoO_3$, $WO_3$, $Bi_2O_5$, $PrO_2$, $Sm_2O_3$, $Nb_2O_5$, $Eu_2O_3$, $TbO_2$ und/oder $Yb_2O_3$ ebenfalls effektiv als Läutermittel einsetzbar sind, wobei deren Maxima der Läutersauerstoffabgabe ebenfalls oberhalb 1700 °C erfolgt. In Tabelle 1 sind einige Beispiele solcher Redox-Verbindungen aufgeführt sowie der Temperaturbereich, in dem die Sauerstoffabgabe erfolgt. Die Temperaturen der Sauerstoffabgabe der Redox-Verbindungen hängen auch von der Glaszusammensetzung ab.

Tabelle 1:

Redox-Reaktionen und Temperaturbereich maximaler Sauerstoffabgabe:

| Redox-Reaktion: | | | $O_2$-Abgabe: |
|---|---|---|---|
| $2\ CeO_2$ | $\leftrightarrows$ | $Ce_2O_3 + \frac{1}{2}\,O_2$ | 1500 - 1700 °C |
| $SnO_2$ | $\leftrightarrows$ | $SnO + \frac{1}{2}\,O_2$ | 1600 - 1900 °C |
| $Fe_2O_3$ | $\leftrightarrows$ | $2\ FeO + \frac{1}{2}\,O_2$ | 1800 - 2000 °C |
| $MoO_3$ | $\leftrightarrows$ | $MoO_2 + \frac{1}{2}\,O_2$ | 1800 - 1900 °C |
| $ZnO$ | $\leftrightarrows$ | $Zn + \frac{1}{2}\,O_2$ | 1900 - 2100 °C |
| $2\ TiO_2$ | $\leftrightarrows$ | $Ti_2O_3 + \frac{1}{2}\,O_2$ | 2000 - 2200°C |
| $V_2O_5$ | $\leftrightarrows$ | $V_2O_3 + O_2$ | 2200 - 2400°C |
| $Bi_2O_3$ | $\leftrightarrows$ | $2\ Bi + 3/2 O_2$ | 1700 - 1800 °C |

Die in Tabelle 1 aufgezeigten Temperaturbereiche wurden an Alumosilicatgläsern ermittelt.

Die Erfindung ist nicht auf diese Redox-Verbindungen bzw. auf polyvalente Redox-Verbindungen beschränkt. Es kommen für die Redox-Läuterung auch Verbindungen in Frage, die bei Temperaturen zwischen 1600°C und 2400°C Sauerstoff abgeben und in die metallische Form übergehen, wie z.B. $ZnO$, $SnO$, $Sb_2O_3$, $As_2O_3$ und $Bi_2O_3$.

Welche Redox-Verbindung als Läutermittel eingesetzt wird, hängt von den sonstigen Anforderungen an das Glas ab.

Viele der Redox-Verbindungen färben das Glas ein. Hier wirkt sich positiv aus, daß nach dem beanspruchten Verfahren bereits geringe Mengen an Läutermittel, zum Teil < 0,2 Gew%, die Läuterung deutlich verbessern.

Neben der Farbwirkung sind die Seltene-Erden-Oxide zum Teil sehr teuer und kommen nur in Ausnahmefällen in Frage.

Durch die Vielzahl der einsatzfähigen Redox-Verbindungen kann mit Hilfe des beanspruchten Verfahrens in vielen Fällen auf den Einsatz der toxischen antimon- und/oder arsenhaltigen Läutermittel ganz verzichtet werden.

Neben dem Redox-Läutermittel können auch anorganische Salze als Läutermittel für die Hochtemperaturläuterung eingesetzt werden, die oberhalb 1600 °C einen Dampfdruck von größer $10^5$ Pa besitzen. Bevorzugt werden dabei als anorganische Salze Halogenide als Läutermittel dem Gemenge zugegeben.

Wie bereits beschrieben, beruht die Läuterwirkung der Halogenide darin, daß sie in den gasförmigen Zustand übergehen. Chloride, deren Maximum der Läutergasabgabe über 1600 °C liegt, sind z.B. $KCl$, $CaCl_2$, $BaCl_2$, $LaCl_3$, $CeCl_3$, $YbCl_2$, $ErCl_3$ und $PrCl_3$. Neben den Chloriden besitzen insbesondere viele Fluoride einen Dampfdruck von > $10^5$ Pa oberhalb 1600°C, wie z.B. $LiF$, $NaF$, $KF$, $ZnF_2$, $MgF_2$, $BaF_2$, $CeF_2$ oder eine Reihe von Seltene-Erden-Fluoride.

Auch eine Reihe von Bromiden besitzt einen Dampfdruck von > $10^5$ Pa oberhalb von 1600°C und kann prinzipiell als Läutermittel erfindungsgemäß eingesetzt werden. Soweit möglich sollte jedoch deren Einsatz vermieden werden, aus gesundheitlichen Gründen.

Bei der Halogenid-Läuterung ist darauf zu achten, daß jeweils das Halogenid mit dem niedrigsten Dampfdruck sich zuerst bildet und verdampft, unabhängig davon, in welcher Verbindung das Halogenid dem Gemenge zugegeben wurde. Enthält das Glas z.B. Lithiumoxid und wird $KCl$ als Läutermittel zugegeben, dann verdampft $LiCl$ bei etwa 1350°C und nicht das $KCl$ bei über 1500°C. Das Chlor kann auch als HCl aus der Glasschmelze entweichen.

Die oben genannte Halogenid-Läutermittel können ihre Läuterwirkung oberhalb 1600°C nur dann entfalten, wenn das Glas keine Komponenten enthält, die Halogenide mit einer niedrigeren Verdampfungstemperatur bilden kön-

**EP 1 078 889 B1**

nen.

Die Läuterwirkung der Halogenide hängt auch davon ab, wie hoch die Löslichkeit der Halogenide im Glas ist.

Ebenfalls von Vorteil ist es, wenn als Läutermittel anorganische Salze zugegeben werden, die sich oberhalb 1600 °C, unter Läutergasabgabe zersetzen und die Zersetzungsprodukte einen Gasdruck von größer $10^5$ Pa besitzen. Bevorzugt kommen dabei die anorganischen Salze zum Einsatz, die Oxo-Anionen, insbesondere Sulfate enthalten. So erreicht reines $Na_2SO_4$ einen Gasdruck von größer $10^5$ Pa bei etwa 1850 °C. Bei den Sulfaten findet eine Zersetzung unter Bildung von $SO_2$ und $O_2$ statt.

Bevorzugte Sulfate mit Zersetzungstemperaturen über 1600 °C sind z.B. $K_2SO_4$, $MgSO_4$, $CaSO_4$, $SrSO_4$, $BaSO_4$ und $La_2(SO_4)_3$. Das Verfahren ist nicht auf die aufgeführten Sulfate beschränkt. Eine effektive Läuterwirkung kann auch bei der Sulfat-Läuterung nur erreicht werden, wenn die Löslichkeit der Sulfate in dem zu läuternden Glas ausreichend hoch ist.

Besonders bei Alumosilicatgläsern ist die Löslichkeit der Sulfate relativ gering, so daß die Sulfate oft nur in Kombination mit anderen Läutermitteln eingesetzt werden können.

Die Läutergasabgabe wird bevorzugt durch ein Läutermittel oder durch die Kombination mehrerer Läutermittel eingestellt.

Bevorzugt werden nichttoxische Läutermittel zugegeben.

In einer weiteren, bevorzugten Verfahrensführung wird die Läuterung durch eingangs erwähnte physikalische Läutermethoden unterstützt.

Die Glasschmelze wird bevorzugt in einem zwangsgekühlten Tiegel oder in einer zwangsgekühlten Wanne erhitzt. Besonders bevorzugt wird die Glasschmelze in einem zwangsgekühlten Skulltiegel mittels Hochfrequenz erhitzt.

Besonders hochschmelzende Gläser, die eine Viskosität von < $10^2$ dPas erst oberhalb 1650 °C ausweisen, werden mittels des erfindungsgemäßen Verfahrens effektiv geläutert.

Die notwendige Läutermittelmenge liegt im Bereich 0,01 bis 3 Gew.-% und ist somit von der Läutertemperatur sowie der Läuterzeit abhängig. Je nach geforderter Läutertemperatur kann man aus Tabelle 1 das optimale Redox-Läutermittel oder eine Kombination von optimalen Redox-Läutermitteln auswählen. Umgekehrt bietet Tabelle 1 einen Anhaltspunkt, um die Läutertemperatur, bei der das Maximum der Läutergasabgabe durch die Läutermittel erfolgt, zu bestimmen. Für jede Glasschmelze kann dann für ein bestimmtes Läutermittel bzw. für mehrere bestimmte Läutermittel die optimale Läutertemperatur leicht experimentell ermittelt werden. Dabei spielt bei der Auswahl der Läutermittel die Viskosität der Schmelze eine wichtige Rolle. Zur effektiven Läuterung sollte die Viskosität kleiner als $10^3$ dPas und bevorzugt kleiner als $10^2$ dPas sein. Je niedriger die Viskosität um so günstiger ist dies für die Läuterung. Als begrenzender Faktor der Optimierung sind die Energiekosten für die Beheizung des Hochtemperaturläuterteils zu sehen, die mit steigender Läutertemperatur aufgrund der steigenden Energieverluste über die Wandung des Schmelzaggregats ansteigen.

Der Energieverlust bei den hohen Schmelztemperaturen kann dadurch klein gehalten werden, daß der benötigte Läutertiegel auf Grund der hohen Läutergeschwindigkeit klein dimensioniert werden kann.

Bei Gläsern mit leicht flüchtigen Bestandteilen muß darauf geachtet werden, daß mit zunehmender Läutertemperatur die Verdampfung dieser leicht flüchtiger Komponenten zunimmt.

Die folgenden Abbildungen und Beispiele verdeutlichen die Erfindung.

Es zeigen:

Fig. 1: die Blasenzahl pro 100 $cm^3$ Alumosilicatglas, sowie die Blasengröße gegen die Läutertemperatur

Fig. 2: die Blasenzahl pro 100 $cm^3$ Alumosilicatglas, sowie die Blasengröße gegen die Läutertemperatur, wobei das Alumosilicatglas erfindungsgemäß geläutert wurde.

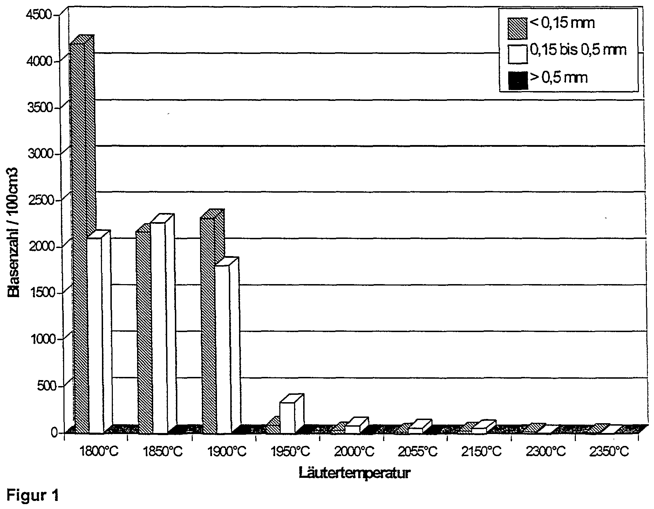

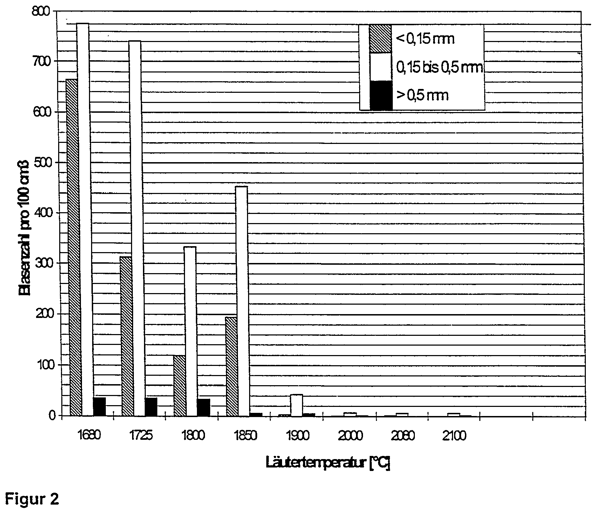

Für ein Alumosilicatglas der Zusammensetzung (in Gew.-%): $Li_2O$: 3,75; $Na_2O$: 0,50; MgO: 0,50; $Al_2O_3$: 22,0; $SiO_2$: 65,0; $TiO_2$: 2,5; $V_2O_3$: 0,3; ZnO: 1,75; $ZrO_2$: 1,7; BaO: 2,0 wurde eine optimale Läuterungstemperatur von 2300 °C gefunden (Fig1.). Durch die Zugabe von nur 0,09 Gew.-% $SnO_2$ konnte die optimale Läutertemperatur auf 2000 °C abgesenkt werden (Fig. 2).

Bei Borosilicatgläsern (Schott Glas 8412) wurden sehr gute Blasenqualitäten bei Läutertemperaturen im Bereich um 1900 °C in Verbindung mit geringen Mengen an Eisenoxid und Sulfat als Läutermittel erhalten. Die erreichte Blasenqualität ist besser (ca. Faktor 4) als im Referenzversuch mit Arsenoxid als Läutermittel und klassischen Läutertemperaturen von 1600 °C.

In Kalk-Natron-Glas (Fernsehschirmglas) konnten sehr gute Ergebnisse bezüglich der Blasenzahl mit $CeO_2$, ZnO, $TiO_2$ und Temperaturen um 1800 °C bis 2000 °C erreicht werden. Die hier erreichte Blasenqualität ist deutlich besser als eine Antimonoxidläuterung bei konventionellen Temperaturen.

Die notwendigen Läuterzeiten liegen bei allen drei Beispielen für das Hochtemperaturverfahren im Bereich von 30 Minuten. Dies sind deutlich kürzere Läuterzeiten als bei der Verwendung der toxischen Läutermittel Arsen- oder

**6**

**EP 1 078 889 B1**

Antimonoxid und konventionellen Läutertemperaturen von etwa 1600 °C. Hier wurde in Tiegelversuchen ermittelt, daß zur Erreichung vergleichbarer Blasenzahlen wie bei der Hochtemperaturläuterung beim konventionellen Schmelzen mit Arsen- oder Antimonoxid. Läuterzeiten von mindestens 3 Stunden notwendig sind. Die kürzeren Läuterzeiten der Hochtemperaturversuche sind auf die höheren Läutertemperaturen zurückzuführen. Je höher die Temperatur der Redoxreaktion, um so schneller ist die Blasenbildung und das Blasenwachstum aufgrund der mit zunehmender Temperaturen steigenden Diffusionskoeffizienten und um so schneller ist der Blasenaufstieg aufgrund der niedrigeren Viskosität der Schmelze.

Läutermittel wie $CeO_2$ oder $SnO_2$ zeigen in Tiegelversuchen bei höheren Temperaturen eine wesentlich effektivere läuternde Wirkung als bei konventionell zugänglichen Temperaturen. Bei Cer- und Zinnoxid ist dies dadurch zu erklären, daß diese Oxide zwar im Bereich um 1500 °C bis 1600 °C bereits erste Sauerstoffabgaben aufweisen, eine signifikante Verschiebung des Gleichgewichts in die reduzierte Form tritt allerdings, wie sich in vorliegender Erfindung herausstellte, erst oberhalb konventionell erreichbarer Temperaturen auf. Bei Sulfat ergaben Versuche, daß die Zersetzung mit zunehmender Läutertemperatur bis 2400 °C stetig ansteigt, was sich in einer Abnahme des Restsulfatgehaltes äußert. Die läuternde Wirkung des Sulfat wird um so besser, je höher die Läutertemperatur ist. Außerdem ist die Reboil-Anfälligkeit eines bei hohen Temperaturen sulfatgeläuterten Glases signifikant reduziert, da der Restsulfatgehalt kleiner ist.

Die beim erfindungsgemäßen Verfahren erforderlichen hohen Temperaturen können beispielsweise durch die induktive Einkopplung eines elektromagnetischenn Feldes mit Frequenzen, vorzugsweise im Bereich von 10 kHz bis 5 Mhz (Hochfrequenzschmelzen) erreicht wurden. Das elektromagnetische Feld erzeugt in der, in der Regel vorerhitzten, elektrisch leitfähigen Glasschmelze Wechselströme, die aufgrund der Joule'schen Wärme zu einem direkten Aufheizen der Schmelzen auf die genannten Temperaturen führt. Vorzugsweise besitzen die so erhitzten Glasschmelzen eine elektrische Leitfähigkeit von > 0,01 $\Omega^{-1}$ cm$^{-1}$ bei etwa 1600 °C. Da bei diesem Verfahren der Energieantrag direkt in die Schmelze erfolgt, ist es möglich den Wandbereich des Schmelzaggregates zu kühlen. Dies kann durch freie Abstrahlung, Luftkühlung oder Wasserkühlung erfolgen. Bewährt als langzeitstabiles Läuteraggregat haben sich sogenannte Skulltiegel aus wassergekühlten Kupferrohren wie sie z.B. für die Kristallzüchtung in der DE 33 16 546 C1 beschrieben werden. Die metallischen Wände sind dabei durch Schlitzung so konzeptioniert, daß sie für Hochfrequenzstrahlung transparent sind. Durch die Wasserkühlung im Wandbereich der Schmelze bildet sich eine Schicht aus arteigenem Material in der die Schmelze eingebettet ist. Damit sind Schmelztemperaturen bis 3000 °C erreichbar. Die Begrenzung ist im wesentlichen nur durch die maximal verfügbare Leistung des Hochfrequenzgenerators sowie die maximal über das Kühlwasser abführbare Leistung gegeben. Das solche Aggregate zur Läuterung von Glas eingesetzt werden können, wird in den Schriften EP 0 176 897 B1, US 4, 780, 121, EP 0 462 028 A1 und WO 92/15531 A1 beschrieben. Dabei werden konventionell erreichbare Läutertemperaturen bis 1600 °C beschrieben während in der EP 0 462 028 A1 auch auf die Vorteile hoher Schmelztemperaturen über 2000 °C und der damit verbesserten physikalischen Läuterung hingewiesen wird.

## Patentansprüche

1. Verfahren zur Läuterung von Glasschmelzen, bei dem Läutergas durch Läutermittel in der Glasschmelze erzeugt wird,
   **dadurch gekennzeichnet,**
   **daß** der Glasschmelze wenigstens ein Läutermittel zugesetzt wird, dessen Maximum der Läutergasabgabe bei dieser Glasschmelze oberhalb 1700 °C liegt, und daß die Glasschmelze auf eine Temperatur zwischen 1700 °C und 2800 °C aufgeheizt und geläutert wird.

2. Verfahren nach Anspruch 1,
   **dadurch gekennzeichnet,**
   **daß** die Glasschmelze auf eine Temperatur zwischen 1700 °C und 2400 °C aufgeheizt wird.

3. Verfahren nach Anspruch 1 oder 2,
   **dadurch gekennzeichnet,**
   **daß** die Viskosität der Glasschmelze auf einen Wert kleiner $10^3$ dPas eingestellt wird.

4. Verfahren nach Anspruch 3,
   **dadurch gekennzeichnet,**
   **daß** die Viskosität der Glasschmelze auf einen Wert kleiner als $10^2$ dPas eingestellt wird

5. Verfahren nach wenigstens einem der Ansprüche 1 bis 4,

**dadurch gekennzeichnet,**
**daß** die Glasschmelze auf die Temperatur aufgeheizt wird, bei der das Maximum der Läutergasabgabe durch die Läutermittel erfolgt.

6. Verfahren nach wenigstens einem der Ansprüche 1 bis 5,
**dadurch gekennzeichnet,**
**daß** als Läutermittel Redox-Verbindungen, insbesondere Redox-Oxide wie $SnO_2$, $CeO_2$, $Fe_2O_3$, $ZnO$, $TiO_2$, $V_2O_5$, $MoO_3$, $WO_3$, $Bi_2O_5$, $PrO_2$, $Sm_2O_3$, $Nb_2O_5$, $Eu_2O_3$, $TbO_2$ und/oder $Yb_2O_3$ zugegeben werden.

7. Verfahren nach wenigstens einem der Ansprüche 1 bis 6,
**dadurch gekennzeichnet,**
**daß** als Läutermittel Metalloxide zugegeben werden, die beim Läutervorgang Sauerstoff abgeben und in den metallischen Zustand übergehen.

8. Verfahren nach Anspruch 7,
**dadurch gekennzeichnet,**
**daß** als Läutermittel Metalloxide wie $ZnO$, $As_2O_3$, $Sb_2O_3$, $Bi_2O_3$ und/oder $SnO$ zugegeben werden.

9. Verfahren nach wenigstens einen der Ansprüche 1 bis 8,
**dadurch gekennzeichnet,**
**daß** als Läutermittel anorganische Salze zugegeben werden, die oberhalb 1500 °C, insbesondere oberhalb 1600 °C einen Dampfdruck von größer $10^5$ Pa besitzen.

10. Verfahren nach Anspruch 9,
**dadurch gekennzeichnet,**
**daß** als anorganischen Salze Halogenide zugegeben werden, insbesondere Chloride wie $KCl$, $CaCl_2$, $BaCl_2$, $LaCl_3$, $CeCl_3$, $YbCl_2$, $ErCl_3$, $PrCl_3$ oder Fluoride wie $LiF$, $NaF$, $KF$, $ZnF_2$, $MgF_2$, $BaF_2$, $CeF_3$ oder Seltene-Erden-Fluoride.

11. Verfahren nach wenigstens einem der Ansprüche 1 bis 10,
**dadurch gekennzeichnet,**
**daß** als Läutermittel anorganische Salze zugegeben werden, die sich oberhalb 1500 °C, insbesondere oberhalb 1600 °C unter Läutergasabgabe zersetzen und die Zersetzungsprodukte einen Gasdruck von größer $10^5$ Pa besitzen.

12. Verfahren nach Anspruch 11,
**dadurch gekennzeichnet,**
**daß** als anorganischen Salze Verbindungen, die Oxo-Anionen enthalten, zugegeben werden, insbesondere Sulfate wie $K_2SO_4$, $MgSO_4$, $CaSO_4$, $SrSO_4$, $BaSO_4$, $La_2(SO_4)_3$.

13. Verfahren nach wenigstens einem der Ansprüche 1 bis 12,
**dadurch gekennzeichnet,**
**daß** die Läutergasabgabe durch ein oder mehrere Läutermittel eingestellt wird.

14. Verfahren nach wenigstens einem der Ansprüche 1 bis 13,
**dadurch gekennzeichnet,**
**daß** nichttoxische Läutermittel zugegeben werden.

15. Verfahren nach wenigstens einem der Ansprüche 1 bis 14,
**dadurch gekennzeichnet,**
**daß** die Läuterung durch physikalische Läutermethoden unterstützt wird.

16. Verfahren nach wenigstens einem der Ansprüche 1 bis15,
**dadurch gekennzeichnet,**
**daß** die Glasschmelze in einem zwangsgekühlten Tiegel oder einer zwangsgekühlten Wanne erhitzt wird.

17. Verfahren nach wenigstens einem der Ansprüche 1 bis 15,
**dadurch gekennzeichnet,**
**daß** die Glasschmelze in einem zwangsgekühlten Skulltiegel mittels Hochfrequenz erhitzt wird.

8

**EP 1 078 889 B1**

**Claims**

1. Method for refining molten glass, in which refining gas is generated by refining agents in the molten glass, **characterized in that** the molten glass has added to it at least one refining agent which releases its maximum level of refining gas in the case of said molten glass at over 1700°C, and **in that** the molten glass is heated to a temperature of between 1700°C and 2800°C and refined.

2. Method according to Claim 1, **characterized in that** the molten glass is heated to a temperature of between 1700°C and 2400°C.

3. Method according to Claim 1 or Claim 2, **characterized in that** the viscosity of the molten glass is set to a level of less than $10^3$ dPas.

4. Method according to Claim 3, **characterized in that** the viscosity of the molten glass is set to a level of less than $10^2$ dPas.

5. Method according to at least one of Claims 1 to 4, **characterized in that** the molten glass is heated to the temperature at which the maximum release of refining gas by the refining agents takes place.

6. Method according to at least one of Claims 1 to 5, **characterized in that** the refining agents added are redox compounds, in particular redox oxides, such as $SnO_2$, $CeO_2$, $Fe_2O_3$, $ZnO$, $TiO_2$, $V_2O_5$, $MoO_3$, $WO_3$, $Bi_2O_5$, $PrO_2$, $Sm_2O_3$, $Nb_2O_5$, $Eu_2O_3$, $TbO_2$ and/or $Yb_2O_3$.

7. Method according to at least one of Claims 1 to 6, **characterized in that** the refining agents added are metal oxides which, during the refining operation, release oxygen and are converted into the metallic state.

8. Method according to Claim 7, **characterized in that** the refining agents added are metal oxides, such as $ZnO$, $As_2O_3$, $Sb_2O_3$, $Bi_2O_3$ and/or $SnO$.

9. Method according to at least one of Claims 1 to 8, **characterized in that** the refining agents added are inorganic salts which above 1500°C, in particular above 1600°C, have a vapour pressure of greater than $10^5$ Pa.

10. Method according to Claim 9, **characterized in that** the inorganic salts added are halides, in particular chlorides, such as $KCl$, $CaCl_2$, $BaCl_2$, $LaCl_3$, $CeCl_3$, $YbCl_2$, $ErCl_3$, $PrCl_3$, or fluorides, such as $LiF$, $NaF$, $KF$, $ZnF_2$, $MgF_2$, $BaF_2$, $CeF_3$, or rare earth fluorides.

11. Method according to at least one of Claims 1 to 10, **characterized in that** the refining agents added are inorganic salts which, above 1500°C, in particular above 1600°C, decompose, releasing refining gas, and the decomposition products have a gas pressure of greater than $10^5$ Pa.

12. Method according to Claim 11, **characterized in that** the inorganic salts added are compounds which contain oxo anions, in particular sulphates, such as $K_2SO4$, $MgSO_4$, $CaSO_4$, $SrSO_4$, $BaSO_4$, $La_2(SO_4)_3$.

13. Method according to at least one of Claims 1 to 12, **characterized in that** the release of refining gas is established by one or more refining agents.

14. Method according to at least one of Claims 1 to 13, **characterized in that** non-toxic refining agents are added.

15. Method according to at least one of Claims 1 to 14, **characterized in that** the refining is assisted by physical refining methods.

16. Method according to at least one of Claims 1 to 15, **characterized in that** the molten glass is heated in a forcibly cooled crucible or a forcibly cooled tank furnace.

17. Method according to at least one of Claims 1 to 15, **characterized in that** the molten glass is heated in a forcibly cooled skull crucible, by high-frequency means.

**Revendications**

1. Procédé d'affinage de masses fondues de verre, selon lequel un gaz d'affinage est formé par des agents d'affinage dans la masse fondue de verre,

   **caractérisé en ce que**

   au moins un agent d'affinage est ajouté à la masse fondue de verre, dont le maximum de la libération de gaz d'affinage dans cette masse fondue de verre se situe au-dessus de 1 700 °C, et **en ce que** la masse fondue de verre est portée à une température comprise entre 1 700 °C et 2 800 °C, et affinée.

2. Procédé selon la revendication 1, **caractérisé en ce que** la masse fondue de verre est portée à une température comprise entre 1 700 °C et 2 400 °C.

3. Procédé selon la revendication 1 ou 2, **caractérisé en ce que** la viscosité de la masse fondue de verre est ajustée à une valeur inférieure à $10^3$ dPas.

4. Procédé selon la revendication 3, **caractérisé en ce que** la viscosité de la masse fondue de verre est ajustée à une valeur inférieure à $10^2$ dPas.

5. Procédé selon au moins l'une quelconque des revendications 1 à 4, **caractérisé en ce que** la masse fondue de verre est portée à une température à laquelle le maximum de libération de gaz d'affinage par les agents d'affinage a lieu.

6. Procédé selon au moins l'une quelconque des revendications 1 à 5, **caractérisé en ce que** des composés redox, notamment des oxydes redox tels que $SnO_2$, $CeO_2$, $Fe_2O_3$, $ZnO$, $TiO_2$, $V_2O_5$, $MoO_3$, $WO_3$, $Bi_2O_5$, $PrO_2$, $Sm_2O_3$, $Nb_2O_5$, $Eu_2O_3$, $TbO_2$ et/ou $Yb_2O_3$, sont ajoutés en tant qu'agents d'affinage.

7. Procédé selon au moins l'une quelconque des revendications 1 à 6, **caractérisé en ce que** des oxydes métalliques qui libèrent de l'oxygène pendant le processus d'affinage et passent à l'état métallique sont ajoutés en tant qu'agents d'affinage.

8. Procédé selon la revendication 7, **caractérisé en ce que** des oxydes métalliques tels que $ZnO$, $As_2O_3$, $Sb_2O_3$, $Bi_2O_3$ et/ou $SnO$ sont ajoutés en tant qu'agents d'affinage.

9. Procédé selon au moins l'une quelconque des revendications 1 à 8, **caractérisé en ce que** des sels inorganiques qui présentent une pression de vapeur supérieure à $10^5$ Pa à une température supérieure à 1 500 °C, notamment supérieure à 1 600 °C, sont ajoutés en tant qu'agents d'affinage.

10. Procédé selon la revendication 9, **caractérisé en ce que** des halogénures sont ajoutés en tant que sels inorganiques, notamment des chlorures tels que $KCl$, $CaCl_2$, $BaCl_2$, $LaCl_3$, $CeCl_3$, $YbCl_2$, $ErCl_3$, $PrCl_3$, ou des fluorures tels que $LiF$, $NaF$, $KF$, $ZnF_2$, $MgF_2$, $BaF_2$, $CeF_3$ ou des fluorures de terres rares.

11. Procédé selon au moins l'une quelconque des revendications 1 à 10, **caractérisé en ce que** des sels inorganiques qui se décomposent à une température supérieure à 1 500 °C, notamment supérieure à 1 600 °C, avec libération de gaz d'affinage, sont ajoutés en tant qu'agents d'affinage, et les produits de décomposition présentent une pression de gaz supérieure à $10^5$ Pa.

12. Procédé selon la revendication 11, **caractérisé en ce que** des composés qui contiennent des anions oxo sont ajoutés en tant que sels inorganiques, notamment des sulfates tels que $K_2SO_4$, $MgSO_4$, $CaSO_4$, $SrSO_4$, $BaSO_4$, $La_2(SO_4)_3$.

13. Procédé selon au moins l'une quelconque des revendications 1 à 12, **caractérisé en ce que** la libération de gaz d'affinage est ajustée par un ou plusieurs agents d'affinage.

14. Procédé selon au moins l'une quelconque des revendications 1 à 13, **caractérisé en ce que** des agents d'affinage non toxiques sont ajoutés.

15. Procédé selon au moins l'une quelconque des revendications 1 à 14, **caractérisé en ce que** l'affinage est soutenu par des méthodes d'affinage physiques.

16. Procédé selon au moins l'une quelconque des revendications 1 à 15, **caractérisé en ce que** la masse fondue de verre est chauffée dans un creuset refroidi de manière forcée ou une cuve refroidie de manière forcée.

17. Procédé selon au moins l'une quelconque des revendications 1 à 15, **caractérisé en ce que** la masse fondue de verre est chauffée dans un creuset refroidi de manière forcée au moyen d'une fréquence élevée.

Figur 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19603698 C1
- DE 19616633 C1
- DE 19617344 C1
- DE 19739912 C2
- FR 776403 A
- DE 1596737

- DE 3316546 C1
- EP 0176897 B1
- US 4780121 A
- EP 0462028 A1
- WO 9215531 A1

**In der Beschreibung aufgeführte Nicht-Patentliteratur**

- Glastechnische Fabrikationsfehler. Springer Verlag, 1980, 195 ff

- **V.V. NEZHENTSEV et al.** *Glass and Ceramics,* 1986, vol. 43, 392-395